(19) Europäisches Patentamt
European Patent Office
Office européen des brevets

(11) **EP 4 339 246 B1**

(12) **EUROPÄISCHE PATENTSCHRIFT**

(45) Veröffentlichungstag und Bekanntmachung des Hinweises auf die Patenterteilung:
**29.01.2025   Patentblatt 2025/05**

(21) Anmeldenummer: **22195362.3**

(22) Anmeldetag: **13.09.2022**

(51) Internationale Patentklassifikation (IPC):
**C09C 1/00** (2006.01)        **C09C 1/64** (2006.01)

(52) Gemeinsame Patentklassifikation (CPC):
**C09C 1/642; C09C 1/0066;** C01P 2004/61; C01P 2006/65; C01P 2006/66; C09C 2200/1054; C09C 2200/1058; C09C 2200/301; C09C 2200/302; C09C 2200/303; C09C 2200/306

(54) **METALLINTERFERENZPIGMENTE MIT DURCH W, IN, GA ODER TI DOTIERTER EISENOXIDSCHICHT, VERFAHREN ZUR HERSTELLUNG DERSELBEN SOWIE VERWENDUNG DERSELBEN**

YELLOW METAL INTERFERENCE PIGMENTS HAVING A GREEN STING, A METHOD FOR THE PRODUCTION THEREOF AND USE THEREOF

PIGMENTS JAUNES A INTERFERENCE METALLIQUE, PRESENTANT UN GOUT VERT, PROCEDE DE PRODUCTION ET UTILISATION DE CES PIGMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.03.2024   Patentblatt 2024/12**

(73) Patentinhaber: **Schlenk Metallic Pigments GmbH 91154 Roth (DE)**

(72) Erfinder:
• **Binder, Yvonne 90584 Allersberg (DE)**
• **Piech, Fabian 90530 Wendelstein (DE)**
• **Huber, Adalbert 64625 Bensheim (DE)**

(74) Vertreter: **Müller-Boré & Partner Patentanwälte PartG mbB Friedenheimer Brücke 21 80639 München (DE)**

(56) Entgegenhaltungen:
WO-A1-2015/040537        WO-A1-2019/063372
WO-A1-2020/038684

**Beschreibung**

Die vorliegende Erfindung betrifft gelbe Metallinterferenzpigmente mit Grünstich, ein Verfahren zur Herstellung derselben sowie die Verwendung derselben.

In den letzten Jahren haben sich Metallinterferenzpigmente zur Einfärbung von Lacken, Druckfarben, Tinten, Kunststoffen, Gläsern, Keramiken und Zubereitungen der dekorativen Kosmetik etabliert. Metallinterferenzpigmente sind dadurch gekennzeichnet, dass ein Metallsubstrat, beispielsweise ein Metallsubstrat aus Aluminium, welches gegebenenfalls mit einer darauf befindlichen Schicht aus Siliziumdioxid stabilisiert ist, von einer hochbrechenden Metalloxidschicht, etwa einer Schicht aus Eisen(III)oxid, umschlossen ist. Da das Metallsubstrat lichtundurchlässig ist, weisen Metallinterferenzpigmente im Gegensatz zu Perlglanzpigmenten, welche ein lichtdurchlässiges Substrat umfassen, ein hohes Deckvermögen auf.

Fällt Licht auf die Metallinterferenzpigmente ein, durchdringt ein Teil des einfallenden Lichts die hochbrechende Metalloxidschicht, während der andere Teil des einfallenden Lichts an der Oberfläche der hochbrechenden Metalloxidschicht reflektiert wird. Der die hochbrechende Metalloxidschicht durchdringende Teil des einfallenden Lichts wird schließlich an der Oberfläche des Metallsubstrats reflektiert. Die an der Oberfläche des Metallsubstrats reflektierten Lichtstrahlen und die an der Oberfläche der hochbrechenden Metalloxidschicht reflektierten Lichtstrahlen weisen einen Gangunterschied auf, wodurch es zu einem Interferenzphänomen kommt, welches letztlich für die Farbgebung (Koloristik) der Metallinterferenzpigmente verantwortlich ist. Durch geeignete Auswahl der hochbrechenden Metalloxidschicht kann ein wunschgemäßer Farbton eingestellt werden, wobei neben dem Brechungsindex hiervon auch die Schichtdicke hiervon Einfluss auf den Farbton hat.

Für eine Vielzahl von Anwendungen ist es wünschenswert, dass die zum Einsatz kommenden Metallinferenzpigmente einen gelben Farbton mit Grünstich, gleichbedeutend mit einem Bunttonwinkel $h_{ab}15°$ von mindestens 85, aufweisen. Zugleich ist es wünschenswert, dass die besagten Metallinferenzpigmente eine hohe Farbsättigung, gleichbedeutend mit einer Buntheit (Chroma) $C^*_{ab}15°$ von mindestens 55, aufweisen. Die derzeit auf dem Markt erhältlichen Metallinterferenzpigmente genügen den vorstehenden Anforderungen nicht.

So zeigen die Metallinterferenzpigmente Zenexo® GoldenShine der Firma Schlenk Metallic Pigments GmbH, Meoxal® Taklamakan Gold der Firma Merck KGaA sowie Paliocrom® Gold der Firma Sun Chemical Colors & Effects GmbH lediglich einen gelben Farbton ohne Grünstich. In diesem Zusammenhang wird auch auf die in WO 2019/063372 A1 offenbarten Metallinterferenzpigmente verwiesen, deren Bunttonwinkel lediglich im Bereich von 68 bis 78 liegt, was noch kein grünstichiges Gelb darstellt. Des Weiteren wird auf WO 2020/038684 A1 verwiesen, welches metallische Effektpigmente offenbart mit einem Bunttonwinkel im Bereich von 50-65; sowie auf WO 2015/040537 A1, welches auch farbige Metalleffektpigmente offenbart.

Der vorliegenden Erfindung liegt somit die Aufgabe zugrunde, gelbe Metallinterferenzpigmente mit Grünstich bereitzustellen, wobei die bereitzustellenden Metallinterferenzpigmente zugleich auch eine hohe Farbsättigung aufweisen sollen.

Gelöst wird die vorstehende Aufgabe durch Bereitstellung der Metallinterferenzpigmente gemäß der vorliegenden Erfindung, umfassend Aluminiumplättchen mit einer mittleren Dicke im Bereich von 5 nm bis 600 nm, welche gegebenenfalls passiviert sind und welche mit einer Schicht A und einer Schicht B in dieser Reihenfolge beschichtet sind,

wobei die Schicht A aus Siliziumdioxid aufgebaut ist und die Schicht B aus Eisen(III)oxid, dotiert mit einem Dotierelement, ausgewählt aus der Gruppe, bestehend aus Wolfram, Indium, Gallium und Titan, aufgebaut ist,
wobei der Stoffmengenanteil des Dotierelements in der Schicht B, bezogen auf die Gesamtstoffmenge des Eisens und des Dotierelements, 0,5 mol% bis 10 mol% beträgt, und
wobei in den Metallinterferenzpigmenten 60 bis 85 Massenteile Eisen(III)oxid, bezogen auf 10 Massenteile Aluminium, vorliegen.

Die erfindungsgemäßen Metallinterferenzpigmente, welche sich durch das weiter unten beschriebene erfindungsgemäße Herstellungsverfahren erhalten lassen, zeichnen sich durch einen gelben Farbton mit Grünstich aus. Erreicht wird dies, indem die hochbrechende Metalloxidschicht neben Eisen(III)oxid geringe Mengen eines bestimmten Dotierelements enthält. Durch die Dotierung lässt sich der Bunttonwinkel der Metallinterferenzpigmente hin zu größeren Werten verschieben, ohne dabei Einbußen in Bezug auf die Buntheit in Kauf nehmen zu müssen.

Die erfindungsgemäßen Metallinterferenzpigmente werden im Folgenden näher beschrieben.

Wie bereits vorstehend erwähnt, umfassen die erfindungsgemäßen Metallinterferenzpigmente Aluminiumplättchen. Die als Metallsubstrat dienenden Aluminiumplättchen sind gegebenenfalls passiviert, d.h. sie können mit einer nativen Oxidschicht überzogen sein. Die Dicke der nativen Oxidschicht liegt typischerweise im Bereich von 3 nm bis 5 nm und wird im Rahmen der vorliegenden Erfindung in die Dicke der Aluminiumplättchen, wie nachstehend angegeben, einbezogen.

Gemäß der vorliegenden Erfindung weisen die Aluminiumplättchen eine mittlere Dicke im Bereich von 5 nm bis 600 nm, bevorzugt im Bereich von 5 nm bis 400 nm, mehr bevorzugt im Bereich von 5 nm bis 200 nm, noch mehr bevorzugt im Bereich von 5 nm bis 100 nm, beispielsweise im Bereich von 10 nm bis 50 nm oder im Bereich von 15 nm bis 30 nm auf. Durch die Verwendung dünner Aluminiumplättchen kann ein besonders hohes Deckvermögen erzielt werden, da bei gleicher Masse an Aluminium ein größerer Bereich der mit den Metallinterferenzpigmenten zu bedeckenden Fläche bedeckt werden kann. Bei der mittleren Dicke der Aluminiumplättchen handelt es sich um deren durchschnittliche Dicke, welche als arithmetisches Zahlenmittel aller gemessenen Dicken zu verstehen ist. Die Bestimmung der mittleren Dicke der Aluminiumplättchen erfolgt durch Ausmessen auf Grundlage rastertransmissionselektronenmikroskopischer (STEM) Aufnahmen. Die mittlere Dicke der Aluminiumplättchen ist hierbei der Mittelwert von mindestens 200 Messungen unterschiedlicher Aluminiumplättchen.

Was die Größe der Aluminiumplättchen, also ihren Durchmesser, anbelangt, ist die vorliegende Erfindung nicht weiter eingeschränkt. Beim Durchmesser der Aluminiumplättchen handelt es sich vorliegend um den sogenannten $d_{50}$. Dieser gibt den Wert an, bei dem 50% der Aluminiumplättchen aus einer Stichprobe kleiner sind als der angegebene Wert. Ohne hierauf beschränkt zu sein, beträgt der Durchmesser $d_{50}$ der Aluminiumplättchen typischerweise 5 $\mu$m bis 100 $\mu$m, beispielsweise 5 $\mu$m bis 50 $\mu$m oder 10 $\mu$m bis 30 $\mu$m. Die Bestimmung des Durchmessers $d_{50}$ der Aluminiumplättchen erfolgt durch Ausmessen auf Grundlage von Laserlichtbeugung gemäß DIN ISO 13320:2020-01 unter Verwendung eines handelsüblichen Partikelgrößenanalysators, wie er beispielsweise von der Firma Sympatec GmbH (Helios BF, mit Quixel Nassdispergierung, Linse 3) kommerziell erhältlich ist.

Das Verhältnis zwischen dem Durchmesser $d_{50}$ der Aluminiumplättchen und der mittleren Dicke der Aluminiumplättchen, welches auch als Aspektverhältnis bezeichnet wird, unterliegt vorliegend ebenfalls keiner besonderen Einschränkung. Es kann in einem Bereich von 50 bis 5000, 100 bis 2000 oder 200 bis 1000 liegen, ohne jedoch hierauf beschränkt zu sein.

Idealerweise weisen die Aluminiumplättchen einen Dicken-SPAN ($t_{SPAN}$) im Bereich von 0,1 bis 0,4, bevorzugt im Bereich von 0,1 bis 0,3, beispielsweise im Bereich von 0,1 bis 0,2, auf, ohne jedoch hierauf beschränkt zu sein. Der Dicken-SPAN ergibt sich aus der Breite der Dickenverteilung und wird gemäß nachstehender Formel berechnet:

$$t_{SPAN} = \frac{t_{90} - t_{10}}{t_{50}}$$

Wie auch beim Durchmesser $d_{50}$ bedeuten die Indizes in der vorstehenden Formel den jeweiligen Wert in der Summenverteilungskurve. $t_{10}$ bedeutet demnach, dass 10% der Aluminiumplättchen dünner sind als die Dicke $t_{10}$. Entsprechend weisen 90% der Aluminiumplättchen eine Dicke gleich oder größer als die Dicke $t_{10}$ auf. Analoge Betrachtungen gelten für die Dicke $t_{50}$ sowie für die Dicke $t_{90}$.

Aus dem Dicken-SPAN erhält man schließlich die Dickenschwankung ($\Delta h$) als prozentuale Angabe:

$$\Delta h = t_{SPAN} \times 100\%$$

Ein Dicken-SPAN im Bereich von 0,1 bis 0,4 bedeutet demnach eine Dickenschwankung im Bereich von 10% bis 40%.

Bei den Aluminiumplättchen kann es sich um solche aus Nassmahlung handeln. Ihrem Erscheinungsbild entsprechend werden durch Nassmahlung erhaltene Aluminiumplättchen mithin auch als "cornflakes" oder "silver dollars" bezeichnet. Während Aluminiumplättchen vom "cornflake"-Typ, welcher auch als lamellarer Typ bezeichnet wird, unregelmäßige und gezackte Seitenkanten aufweisen, sind diese bei Aluminiumplättchen vom "silver dollar"-Typ, welcher auch als lentikularer Typ bezeichnet wird, zumeist abgerundet.

Anstelle von Nassmahlung können die Aluminiumplättchen auch durch physikalische Gasphasenabscheidung (engl. physical vapor deposition, PVD) erhalten werden. Die so erhaltenen Aluminiumplättchen werden auch als Vakuummetallisierte Pigmente (engl. vacuum metallized pigments, VMPs) bezeichnet. Bei ihnen handelt es sich ihrem Erscheinungsbild entsprechend um Vielecke mit geraden Seitenkanten. Aufgrund ihres Herstellungsprozesses weisen Vakuum-metallisierte Pigmente eine extrem geringe Dickenschwankung auf und sind zudem deutlich glatter als Aluminiumplättchen aus der Nassmahlung. Metallinterferenzpigmente auf Basis von Vakuum-metallisierten Pigmenten weisen nicht nur eine ausgezeichnete Farbsättigung auf, sondern sind auch in Bezug auf ihr Deckvermögen ausgezeichnet. Vorzugsweise sind die Aluminiumplättchen der erfindungsgemäßen Metallinterferenzpigmente daher Vakuum-metallisierte Pigmente. Kommerziell erhältlich sind Vakuum-metallisierte Pigmente von verschiedenen Anbietern. In diesem Zusammenhang sind beispielsweise die Vakuum-metallisierten Pigmente Decomet® der Firma Schlenk Metallic Pigments GmbH, ME-TALURE® der Firma Eckart GmbH sowie Metasheen® der Firma Sun Chemical Colors & Effects GmbH zu nennen.

Gemäß der vorliegenden Erfindung sind die Aluminiumplättchen mit einer Schicht A und einer Schicht B in dieser Reihenfolge beschichtet. Auf den Aluminiumplättchen ist also zunächst eine Schicht A aufgebracht. Auf dieser ist wiederum eine Schicht B aufgebracht. Die Schicht A und die Schicht B umhüllen somit die Aluminiumplättchen, wobei die Schicht A zwischen den Aluminiumplättchen und der Schicht B angeordnet ist. Typischerweise sind die Aluminiumplättchen derart mit der Schicht A und der Schicht B beschichtet, dass die Umhüllung jeweils vollständig ist.

Die Schicht A, welche aus Siliziumdioxid aufgebaut und niedrigbrechend (Brechungsindex n ≤ 1,8) ist, dient der Stabilisierung der Aluminiumplättchen. So verhindert die Schicht A, dass die Aluminiumplättchen den Bedingungen, wie sie bei der anschließenden Bildung der Schicht B herrschen, unmittelbar ausgesetzt sind.

Ohne hierauf beschränkt zu sein, kann die Schicht A eine mittlere Dicke im Bereich von 5 nm bis 200 nm, beispielsweise im Bereich von 10 nm bis 100 nm, aufweisen. Für die Bestimmung der mittleren Dicke der Schicht A gelten die Ausführungen, wie sie vorstehend im Zusammenhang mit der Bestimmung der mittleren Dicke der Aluminiumplättchen getroffen worden sind, mit dem Unterschied, dass lediglich 100 Proben vermessen und mittels rasterelektronenmikroskopischer (SEM) Aufnahmen ausgewertet werden.

Für die Interferenz und damit auch für die Farbgebung der Metallinterferenzpigmente ist in erster Linie die Schicht B, welche ihrerseits hochbrechend (Brechungsindex n > 1,8) ist, verantwortlich. Vorliegend ist die Schicht B aus Eisen(III)oxid aufgebaut, wobei dieses mit einem Dotierelement, ausgewählt aus der Gruppe, bestehend aus Wolfram, Indium, Gallium und Titan dotiert ist. Durch die Anwesenheit des Dotierelements in der Schicht B lässt sich der Brechungsindex der Schicht B dahingehend beeinflussen, dass der Bunttonwinkel der Metallinterferenzpigmente hin zu größeren Werten verschoben wird, wodurch die Metallinterferenzpigmente letztlich einen gelben Farbton mit Grünstich aufweisen. Vorzugsweise ist das Dotierelement Wolfram, da dieses in Form entsprechender Verbindungen leicht verfügbar ist.

Was die Menge des Dotierelements anbelangt, beträgt der Stoffmengenanteil des Dotierelements in der Schicht B, bezogen auf die Gesamtstoffmenge des Eisens und des Dotierelements, 0,5 mol% bis 10 mol%, bevorzugt 1,0 bis 8 mol%, und noch mehr bevorzugt 1,5 bis 7 mol%. Ist die Menge des Dotierelements zu gering, wird noch kein gelber Farbton mit Grünstich erzielt. Eine zu große Menge des Dotierelements geht wiederum zu Lasten der Farbsättigung, was sich in einer Abnahme der Buntheit der Metallinterferenzpigmente bemerkbar macht. Der Stoffmengenanteil des Dotierelements in der Schicht B, bezogen auf die Gesamtstoffmenge des Eisens und des Dotierelements, wird mittels energiedispersiver Röntgenspektroskopie (EDX) bestimmt.

Wie bereits eingangs ausgeführt, hat neben dem Brechungsindex auch die Dicke der Schicht B Einfluss auf den Farbton. Typischerweise weist die Schicht B eine mittlere Dicke im Bereich von 15 nm bis 300 nm auf, wobei die mittlere Dicke der Schicht B beispielsweise im Bereich von 25 nm bis 200 nm oder im Bereich von 50 nm bis 150 nm liegen kann. Für die Bestimmung der mittleren Dicke der Schicht B gelten die Ausführungen, wie sie vorstehend im Zusammenhang mit der Bestimmung der mittleren Dicke der Aluminiumplättchen getroffen worden sind, mit dem Unterschied, dass lediglich 100 Proben vermessen und mittels rasterelektronenmikroskopischer (SEM) Aufnahmen ausgewertet werden.

Sowohl im Fall der Schicht A als auch im Fall der Schicht B lässt sich die Dicke der jeweiligen Schicht über die zugegebene Menge der betreffenden Vorläuferverbindung einstellen. Bei gleicher Menge an vorgelegten Aluminiumplättchen nimmt die Dicke der jeweiligen Schicht zu, je mehr der betreffenden Vorläuferverbindung zugegeben wird. Die Menge der zugegebenen Vorläuferverbindung wird also derart eingestellt, dass die Schicht A und die Schicht B geeignete Dicken, welche beispielsweise in den vorstehenden Bereichen liegen, aufweisen. Auf die Vorläuferverbindungen der Schicht A und der Schicht B wird weiter unten bei der Beschreibung des erfindungsgemäßen Herstellungsverfahrens noch näher eingegangen.

Gemäß der vorliegenden Erfindung liegen in den Metallinterferenzpigmenten 60 bis 85 Massenteile Eisen(III) oxid, bezogen auf 10 Massenteile Aluminium, vor, beispielsweise 60 bis 80 Massenteile oder 60 bis 75 Massenteile. Dem Fachmann ist hierbei bewusst, dass, wenn die Aluminiumplättchen dünner werden, die Masse an Eisen(III)oxid zur Erzielung einer bestimmten Schichtdicke zunehmen muss, vorausgesetzt, dass die Masse an Aluminium konstant bleibt. Der Grund hierfür ist, dass bei dünner werdenden Aluminiumplättchen deren zu beschichtende Oberfläche zunimmt. Die vorstehenden Betrachtungen gelten naturgemäß nicht nur für die Schicht B, sondern in gleicher Weise auch für die Schicht A.

Die Schicht B kann mit einer Oberflächenbeschichtung als Schicht C versehen sein. Ohne Beschränkung kann die Oberflächenbeschichtung etwa aus organischen Polymeren, Silanen oder Siloxanen gebildet sein. Auch kann die Oberflächenbeschichtung aus Siliziumdioxid aufgebaut sein, wie weiter unten im Zusammenhang mit dem erfindungsgemäßen Herstellungsverfahren beschrieben. Grundsätzlich sind auch Kombinationen aus Siliziumdioxid und Silanen oder dergleichen möglich.

Durch Aufbringen einer derartigen Oberflächenbeschichtung auf die Schicht B, wobei man auch von einer Oberflächenfunktionalisierung spricht, lässt sich unter anderem die mechanische und chemische Beständigkeit der Metallinterferenzpigmente weiter erhöhen. Eine derartige Oberflächenbeschichtung ist jedoch nicht zwingend erforderlich. Entsprechend können die Metallinterferenzpigmente auch aus Aluminiumplättchen mit einer mittleren Dicke im Bereich von 5 nm bis 600 nm, welche gegebenenfalls passiviert sind und welche mit einer Schicht A und einer Schicht B in dieser Reihenfolge beschichtet sind, bestehen. Abgesehen von der Schicht A und der Schicht B sind in dieser Ausführungsform also keine weiteren Schichten auf den gegebenenfalls passivierten Aluminiumplättchen vorhanden.

Die erfindungsgemäßen Metallinterferenzpigmente weisen aufgrund ihres spezifischen Aufbaus, wie vorstehend beschrieben, einen gelben Farbton mit Grünstich bei zugleich hoher Farbsättigung auf. In anderen Worten weisen die erfindungsgemäßen Metallinterferenzpigmente einen Bunttonwinkel $h_{ab}15°$ von mindestens 85 bei einer Buntheit $C^*_{ab}15°$ von mindestens 55 auf.

Zur Bestimmung der koloristischen Eigenschaften, namentlich des Bunttonwinkels $h_{ab}15°$ und der Buntheit $C^*_{ab}15°$, wird zunächst eine Lackformulierung aus 0,7 g der Metallinterferenzpigmente und 9,3 g eines Lacks, enthaltend butanolfeuchte Nitrocellulose und ein Polycyclohexanon-Harz sowie ein weiteres Harz auf Basis eines Butylacrylat-Isobutylvinylethers (Feststoffanteil von 8,5 Massen-%), angesetzt. Die Pigmentierung beträgt demnach 7 Massen-%. Nach Durchmischen der Lackformulierung mit Hilfe eines Speedmixers der Firma Hauschild & Co. KG, wodurch es zu einer Dispergierung der Metallinterferenzpigmente in der Lackformulierung kommt, wird diese sodann mit Hilfe eines Filmziehgeräts der Firma Zehntner GmbH unter Verwendung einer 38 μm-Rakel der Firma TQC Sheen GmbH auf einem schwarz/weiß-Prüfkarton (DIN A5, mit optischem Aufheller) der Firma TQC Sheen GmbH appliziert. Nach der Rakelapplikation mit anschließendem Trocknen zunächst bei Raumtemperatur, d.h. bei 25 °C, gefolgt von einer Trocknung bei 60 °C, wird die spektrale Reflexion eines unter einem Winkel von 45° auf die Messoberfläche einfallenden, von einer D65-Lichtquelle abgestrahlten Lichtbündels bei sechs verschiedenen Detektionswinkeln (-15°, 15°, 25°, 45°, 75° und 110°) für einen 10°-Beobachter gemäß DIN EN ISO 18314-3:2018-12 mit einem kommerziell erhältlichen Mehrwinkel-Spektralphotometer vermessen und in die entsprechenden Größen des CIELAB-Farbraums umgerechnet. Die Messung erfolgt hier auf einem Vakuummesstisch des Typs "Color Scout A+" der Firma ColorPartner GmbH mit einem Mehrwinkel-Spektralphotometer des Typs "BYKmac i" der Firma BYK-Gardner GmbH. Dieses kommt auch bei der Bestimmung des Farbabstands $\Delta E110°$ zum Einsatz, wie nachstehend beschrieben.

Neben ihren koloristischen Eigenschaften lassen sich die erfindungsgemäßen Metallinterferenzpigmente auch anhand ihres Farbabstands $\Delta E\,110°$ charakterisieren. Der Farbabstand $\Delta E110°$ ist ein Maß für das Deckvermögen der Metallinterferenzpigmente, wobei ein kleinerer Farbabstand $\Delta E110°$ ein höheres Deckvermögen bedeutet. Auch bei der Bestimmung des Farbabstands $\Delta E110°$ bedarf es zunächst einer Rakelapplikation, wie vorstehend beschrieben, wobei die Pigmentierung auch hier 7 Massen-% beträgt. Der Farbabstand wird sodann in der Geometrie 45°/110° gemäß DIN 6175:2019-07 mit einem kommerziell erhältlichen Mehrwinkel-Spektralphotometer vermessen.

Bedingt durch den Umstand, dass die als Metallsubstrat dienenden Aluminiumplättchen lichtundurchlässig sind, weisen die erfindungsgemäßen Metallinterferenzpigmente typischerweise einen Farbabstand $\Delta E110°$ von weniger als 1,5 auf. Dies gilt umso mehr, wenn dünne Aluminiumplättchen verwendet werden, etwa solche mit einer mittleren Dicke im Bereich von 5 nm bis 30 nm, und/oder wenn hierfür Vakuum-metallisierte Pigmente verwendet werden.

Weiterhin stellt die vorliegende Erfindung ein Verfahren zur Herstellung der erfindungsgemäßen Metallinterferenzpigmente, wie sie vorstehend beschrieben worden sind, bereit, wobei das erfindungsgemäße Herstellungsverfahren die nachstehenden Schritte (a) bis (c) umfasst:

(a) Bereitstellen von Aluminiumplättchen mit einer mittleren Dicke im Bereich von 5 nm bis 600 nm, welche gegebenenfalls passiviert sind;
(b) Beschichten der in Schritt (a) bereitgestellten Aluminiumplättchen mit einer Schicht A aus Siliziumdioxid durch hydrolytische Zersetzung einer organischen Siliziumverbindung oder durch Fällung von Wasserglas; und
(c) Beschichten der in Schritt (b) erhaltenen Schicht A mit einer Schicht B aus Eisen(III)oxid, dotiert mit einem Dotierelement, ausgewählt aus der Gruppe, bestehend aus Wolfram, Indium, Gallium und Titan, durch Fällung eines Eisensalzes in der Gegenwart eines Dotiersalzes, ausgewählt aus der Gruppe, bestehend aus einem Wolframsalz, einem Indiumsalz, einem Galliumsalz und einem Titansalz.

Die mit dem erfindungsgemäßen Herstellungsverfahren erhältlichen Metallinterferenzpigmente weisen einen gelben Farbton mit Grünstich bei zugleich hoher Farbsättigung auf.

Das erfindungsgemäße Herstellungsverfahren wird im Folgenden näher beschrieben, wobei die im Zusammenhang mit den erfindungsgemäßen Metallinterferenzpigmenten getroffenen Definitionen, soweit nachstehend nichts anderes angegeben ist, gleichermaßen gelten.

In Schritt (a) des erfindungsgemäßen Herstellungsverfahrens werden Aluminiumplättchen mit einer mittleren Dicke im Bereich von 5 nm bis 600 nm, welche gegebenenfalls passiviert sind, bereitgestellt. Hierzu können die Aluminiumplättchen in suspendierter Form vorgelegt werden. Zum Suspendieren der Aluminiumplättchen kann ein organisches Lösungsmittel verwendet werden, etwa Isopropanol, welches insbesondere auch im Hinblick auf den nachfolgenden Beschichtungsvorgang in Schritt (b) geeignet ist.

In Schritt (b) des erfindungsgemäßen Herstellungsverfahrens werden die in Schritt (a) bereitgestellten Aluminiumplättchen mit einer Schicht A aus Siliziumdioxid beschichtet. Dies kann durch hydrolytische Zersetzung einer organischen Siliziumverbindung erfolgen. Exemplarisch ist als organische Siliziumverbindung Tetraethylorthosilikat (TEOS) genannt, welches auch als Tetraethoxysilan bezeichnet wird. Grundsätzlich kann jedoch auch jede andere organische Siliziumverbindung verwendet werden, sofern sie über hydrolysierbare Gruppen verfügt. Alternativ kann das Beschichten in Schritt (b) durch Fällung von Wasserglas erfolgen.

Zur Beschichtung in Schritt (b) wird die hydrolytische Zersetzung vorzugsweise in der Gegenwart einer Base oder einer Säure als Katalysator durchgeführt. Als basische Katalysatoren eignen sich neben Alkalilaugen wie etwa Natronlauge oder Kalilauge insbesondere auch wässrige Ammoniaklösungen. Als geeignete saure Katalysatoren sind beispielsweise Phosphorsäure und Carbonsäuren wie Essigsäure und Oxalsäure zu nennen. Für die hydrolytische Zersetzung muss Wasser zumindest in der stöchiometrisch erforderlichen Menge vorliegen, wobei in der Regel mit einem Überschuss an Wasser gearbeitet wird. Für die Temperaturführung ist es zweckmäßig, wenn das Reaktionsgemisch innerhalb von 10 Stunden bis 48 Stunden schrittweise auf 70 °C bis 75 °C erwärmt wird.

Erfolgt die Beschichtung in Schritt (b) durch Fällung von Wasserglas, wird typischerweise innerhalb von 2 Stunden bei 70 °C eine Lösung von Natronwasserglas (DAB6) zudosiert. Je nach Größe des Reaktors und Pigmentoberfläche geschieht die Zudosierung mit einer Geschwindigkeit von 0,1 bis 0,2 l/min, wobei der pH-Wert mit verdünnter Schwefelsäure konstant bei 8,0 gehalten wird. Anschließend wird für eine Dauer von 15 Minuten nachgerührt, wobei sich der pH-Wert kaum ändert.

Nach erfolgter hydrolytischer Zersetzung der organischen Siliziumverbindung bzw. nach erfolgter Fällung des Wasserglases werden die mit der Schicht A beschichteten Aluminiumplättchen von den übrigen Bestandteilen des Reaktionsgemisches mit Hilfe einer Filterpresse abgetrennt und gewaschen. Weitere Einzelheiten, was den Beschichtungsvorgang in Schritt (b) anbelangt, sind dem Fachmann bekannt und lassen sich beispielsweise WO 2015/014484 A1 entnehmen.

In Schritt (c) des erfindungsgemäßen Herstellungsverfahrens wird die in Schritt (b) erhaltene Schicht A mit einer Schicht B aus Eisen(III)oxid, dotiert mit einem Dotierelement, ausgewählt aus der Gruppe, bestehend aus Wolfram, Indium, Gallium und Titan, beschichtet. Dies geschieht durch Fällung eines Eisensalzes in der Gegenwart eines Dotiersalzes, ausgewählt aus der Gruppe, bestehend aus einem Wolframsalz, einem Indiumsalz, einem Galliumsalz und einem Titansalz. Bei dem Eisensalz handelt es sich typischerweise um Eisen(III)chlorid, wobei auch andere Eisensalze eingesetzt werden können, sofern sie sich letztlich zu Eisen(III)oxid fällen lassen. Ohne hierauf beschränkt zu sein, kann das Dotiersalz aus der Gruppe, bestehend aus Natriumwolframat (Dihydrat), Indium(III)chlorid, Gallium(III) nitrat und Titan(IV)oxychlorid (x Hydrogenchlorid), ausgewählt sein. Für die Dotierung hat sich insbesondere Natriumwolframat (Dihydrat) aufgrund seiner leichten Verfügbarkeit als vorteilhaft erwiesen. Grundsätzlich sind jedoch auch andere Dotiersalze als die vorstehend genannten denkbar, sofern mit ihnen eine entsprechende Dotierung möglich ist.

Zur Beschichtung in Schritt (c) können die mit der Schicht A aus Siliziumdioxid beschichteten Aluminiumplättchen aus Schritt (b), welche nach dem Waschen als wässrige Aufschlämmung vorliegen, unmittelbar eingesetzt werden. Es bedarf also keiner Resuspendierung. Der pH-Wert wird sodann durch Zugabe einer Säure auf etwa 3,4 eingestellt. Anschließend wird eine wässrige Lösung des Eisensalzes zugegeben. Parallel hierzu wird eine wässrige Ammoniaklösung oder dergleichen zugegeben. Hierdurch wird die Fällung induziert und gleichzeitig der pH-Wert konstant gehalten, welcher in Folge der Fällungsreaktion ansonsten abnehmen würde, wie dies etwa bei der Verwendung von Eisen(III)chlorid aufgrund der Freisetzung von Chlorwasserstoff der Fall wäre. Das Dotiersalz kann entweder in der wässrigen Lösung des Eisensalzes, etwa im Fall von Indium(III)chlorid, Gallium(III)nitrat und Titan(IV)oxychlorid (x Hydrogenchlorid), oder in der wässrigen Ammoniaklösung oder dergleichen, etwa im Fall von Natriumwolframat (Dihydrat), vorgelegt werden. Die Menge des Eisensalzes wird dabei so gewählt, dass in den Metallinterferenzpigmenten, bezogen auf 10 Massenteile Aluminium, 60 bis 85 Massenteile Eisen(III)oxid, vorliegen. Die Menge des Dotiersalzes wird dabei so gewählt, dass der Stoffmengenanteil des Dotierelements in der Schicht B, bezogen auf die Gesamtstoffmenge des Eisens und des Dotierelements, 0,5 mol% bis 10 mol% beträgt. Hierdurch wird sichergestellt, dass die Metallinterferenzpigmente einen gelben Farbton mit Grünstich, gleichbedeutend mit einem Bunttonwinkel $h_{ab}15°$ von mindestens 85, bei zugleich hoher Farbsättigung, gleichbedeutend mit einer Buntheit $C^*_{ab}15°$ von mindestens 55, aufweisen.

In der Regel wird bei der Beschichtung in Schritt (b) das eingesetzte Eisensalz quantitativ umgesetzt. Selbiges gilt für das Dotiersalz.

Nach erfolgter Fällung des Eisensalzes in der Gegenwart des Dotiersalzes wird der pH-Wert auf etwa 5 eingestellt. Nach Abkühlen und Waschen der mit der Schicht A und der Schicht B beschichteten Aluminiumplättchen erfolgt eine Vakuumtrocknung bei einer Temperatur von 60 °C. Anschließend werden die mit der Schicht A und der Schicht B beschichteten Aluminiumplättchen noch einer thermischen Behandlung unterzogen, welche durch ein Halten bei einer Temperatur von 250 °C bis 400 °C für eine Dauer von 30 Minuten bis 2 Stunden gekennzeichnet ist. Hierdurch wird das zunächst entstehende Eisen(III)hydroxid, dotiert mit einem Dotierelement, ausgewählt aus der Gruppe, bestehend aus Wolfram, Indium, Gallium und Titan, in das entsprechende Eisen(III)oxid überführt. Weitere Einzelheiten, was die Fällung in Schritt (c) anbelangt, sind dem Fachmann bekannt und lassen sich beispielsweise WO 2015/014484 A1 entnehmen.

Die in Schritt (c) erhaltenen Metallinterferenzpigmente können nun unmittelbar eingesetzt werden. Bei Bedarf kann in einem sich anschließenden Schritt (d) die Schicht B noch mit einer Oberflächenbeschichtung, welche etwa aus organischen Polymeren, Silanen oder Siloxanen gebildet ist, versehen werden. Das diesbezügliche Vorgehen ist unter anderem in WO 2015/044188 A1 ausführlich beschrieben. Sofern die Oberflächenbeschichtung aus Siliziumdioxid aufgebaut ist, kann wie in Schritt (b) Verfahren werden.

Schließlich stellt die vorliegende Erfindung die Verwendung der erfindungsgemäßen Metallinterferenzpigmente zur Einfärbung von Lacken, Druckfarben, Tinten, Kunststoffen, Gläsern, Keramiken und Zubereitungen der dekorativen Kosmetik bereit. Durch die Einfärbung unter Verwendung der erfindungsgemäßen Metallinterferenzpigmente wird dem jeweiligen Erzeugnis ein gelber Farbton mit Grünstich bei zugleich hoher Farbsättigung verliehen. Mit den aus dem Stand der Technik bekannten Metallinterferenzpigmenten ist dies hingegen nicht möglich.

**Beispiele**

Die nachstehenden Beispiele dienen der weiteren Erläuterung der vorliegenden Erfindung, ohne jedoch hierauf beschränkt zu sein.

In jedem der nachstehenden Beispiele und Vergleichsbeispiele wurden 600 g einer wässrigen Suspension passivierter Aluminiumplättchen, welche mit einer etwa 40 nm dicken Schicht aus Siliziumdioxid beschichtet waren, eingesetzt. Bei den kommerziell erhältlichen Aluminiumplättchen (Decomet® der Firma Schlenk Metallic Pigments GmbH) handelte es sich um Vakuum-metallisierte Pigmente mit einer mittleren Dicke von etwa 25 nm und einem Durchmesser $d_{50}$ von etwa 12 μm. Der Feststoffanteil der wässrigen Suspension lag bei 7,5 Massen-%. Entsprechend enthielt die wässrige Suspension 45 g der mit einer Schicht aus Siliziumdioxid beschichteten passivierten Aluminiumplättchen, wobei etwa 15 g hiervon auf die Aluminiumplättchen entfielen.

Bei der Bildung der Schicht aus $SiO_2$ auf den passivierten Aluminiumplättchen wurde wie folgt vorgegangen: 153,5 g einer Suspension der vakuum-metallisierten Pigmente in Isopropanol mit einem Feststoffanteil von 14,6 Massen-% wurden in einem Gefäß vorgelegt, mit 100,5 g Ethanol verdünnt und auf eine Temperatur von 70 °C erwärmt. Anschließend erfolgte die Zugabe von 3,5 g einer 10%-igen Lösung von Kaliumhydroxid in Ethanol. Bei einer Temperatur von 70 °C erfolgte nun nacheinander die Zugabe von 53,4 g TEOS und einem Gemisch aus 170 g Wasser und 10,9 g einer 25%-igen Lösung von Ammoniak in Wasser. Nach einer Reaktionszeit von 30 Minuten erfolgte eine zweite Zugabe von TEOS (46,6 g), nach einer Reaktionszeit von weiteren 30 Minuten erfolgte eine dritte Zugabe von TEOS (41,3 g) und nach einer Reaktionszeit von wiederum weiteren 30 Minuten erfolgte eine vierte Zugabe von TEOS (17,0 g), gefolgt von einer abschließenden Reaktionszeit von einer Stunde. Anschließend wurden 300 g Wasser zugegeben und das Gemisch wurde in ein größeres Gefäß überführt. Sodann wurde durch Zugabe von 2200 g Wasser unter Rühren weiter verdünnt. Anschließend wurden 0,5 g Zitronensäure zugegeben, gefolgt von einer Sedimentation für eine Dauer von 12 Stunden bis 24 Stunden. Der Überstand wurde abgenommen und es wurde erneut mit Wasser aufgefüllt. Nach erneuter Sedimentation für eine Dauer von 12 Stunden bis 24 Stunden wurde der Überstand wieder abgenommen. Es erfolgte schließlich ein Auffüllen mit Wasser, bis eine wässrige Suspension mit einem Feststoffanteil von 7,5 Massen-%, wie vorstehend angegeben, erhalten wurde.

Beispiel A

Nach Erwärmen der wässrigen Suspension auf eine Temperatur von etwa 75 °C und Einstellen des pH-Werts auf etwa 3,4 wurden 518,0 g einer 40%-igen Lösung von Eisen(III)chlorid in Wasser zugegeben. Parallel dazu erfolgte die Zugabe von 365,8 g einer 18,25%-igen Lösung von Ammoniak in Wasser, um die Fällung zu induzieren und den pH-Wert konstant zu halten. Als Dotiersalz kam Natriumwolframat (Dihydrat) zum Einsatz, wobei dieses zuvor der wässrigen Ammoniaklösung zugegeben worden war. Dabei entfielen 8,2 g der wässrigen Ammoniaklösung auf das Dotiersalz, entsprechend einem Massenanteil von etwa 2,25 Massen-% Natriumwolframat (Dihydrat) in der wässrigen Ammoniaklösung. Das Beschichten mit der Schicht B erfolgte dergestalt, dass in den Metallinterferenzpigmenten 68,0 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Beispiel B

Nach Erwärmen der wässrigen Suspension auf eine Temperatur von etwa 75 °C und Einstellen des pH-Werts auf etwa 3,4 wurden 540,8 g einer 40%-igen Lösung von Eisen(III)chlorid in Wasser zugegeben. Parallel dazu erfolgte die Zugabe von 382,0 g einer 18,25%-igen Lösung von Ammoniak in Wasser, um die Fällung zu induzieren und den pH-Wert konstant zu halten. Als Dotiersalz kam Natriumwolframat (Dihydrat) zum Einsatz, wobei dieses zuvor der wässrigen Ammoniaklösung zugegeben worden war. Dabei entfielen 8,6 g der wässrigen Ammoniaklösung auf das Dotiersalz, entsprechend einem Massenanteil von etwa 2,25 Massen-% Natriumwolframat (Dihydrat) in der wässrigen Ammoniaklösung. Das Beschichten mit der Schicht B erfolgte dergestalt, dass in den Metallinterferenzpigmenten 71,0 g Eisen(III) oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

### Beispiel C

Nach Erwärmen der wässrigen Suspension auf eine Temperatur von etwa 75 °C und Einstellen des pH-Werts auf etwa 3,4 wurden 492,8 g einer 40%-igen Lösung von Eisen(III)chlorid in Wasser zugegeben. Parallel dazu erfolgte die Zugabe von 364,9 g einer 18,25%-igen Lösung von Ammoniak in Wasser, um die Fällung zu induzieren und den pH-Wert konstant zu halten. Als Dotiersalz kam Natriumwolframat (Dihydrat) zum Einsatz, wobei dieses zuvor der wässrigen Ammoniaklösung zugegeben worden war. Dabei entfielen 24,7 g der wässrigen Ammoniaklösung auf das Dotiersalz, entsprechend einem Massenanteil von etwa 6,76 Massen-% Natriumwolframat (Dihydrat) in der wässrigen Ammoniaklösung. Das Beschichten mit der Schicht B erfolgte dergestalt, dass in den Metallinterferenzpigmenten 64,7 g Eisen(III) oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

### Beispiel D

Nach Erwärmen der wässrigen Suspension auf eine Temperatur von etwa 75 °C und Einstellen des pH-Werts auf etwa 3,4 wurden 519,5 g einer 40%-igen Lösung von Eisen(III)chlorid in Wasser zugegeben. Parallel dazu erfolgte die Zugabe von 384,7 g einer 18,25%-igen Lösung von Ammoniak in Wasser, um die Fällung zu induzieren und den pH-Wert konstant zu halten. Als Dotiersalz kam Natriumwolframat (Dihydrat) zum Einsatz, wobei dieses zuvor der wässrigen Ammoniaklösung zugegeben worden war. Dabei entfielen 26,0 g der wässrigen Ammoniaklösung auf das Dotiersalz, entsprechend einem Massenanteil von etwa 6,76 Massen-% Natriumwolframat (Dihydrat) in der wässrigen Ammoniaklösung. Das Beschichten mit der Schicht B erfolgte dergestalt, dass in den Metallinterferenzpigmenten 68,2 g Eisen(III) oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

### Beispiel E

Nach Erwärmen der wässrigen Suspension auf eine Temperatur von etwa 75 °C und Einstellen des pH-Werts auf etwa 3,4 wurden 537,0 g einer 40%-igen Lösung von Eisen(III)chlorid in Wasser zugegeben. Parallel dazu erfolgte die Zugabe von 397,6 g einer 18,25%-igen Lösung von Ammoniak in Wasser, um die Fällung zu induzieren und den pH-Wert konstant zu halten. Als Dotiersalz kam Natriumwolframat (Dihydrat) zum Einsatz, wobei dieses zuvor der wässrigen Ammoniaklösung zugegeben worden war. Dabei entfielen 26,9 g der wässrigen Ammoniaklösung auf das Dotiersalz, entsprechend einem Massenanteil von etwa 6,76 Massen-% Natriumwolframat (Dihydrat) in der wässrigen Ammoniaklösung. Das Beschichten mit der Schicht B erfolgte dergestalt, dass in den Metallinterferenzpigmenten 70,5 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Beispiel F

Nach Erwärmen der wässrigen Suspension auf eine Temperatur von etwa 75 °C und Einstellen des pH-Werts auf etwa 3,4 wurden 542,1 g einer 40%-igen Lösung von Eisen(III)chlorid in Wasser zugegeben. Parallel dazu erfolgte die Zugabe von 368,1 g einer 18,25%-igen Lösung von Ammoniak in Wasser, um die Fällung zu induzieren und den pH-Wert konstant zu halten. Als Dotiersalz kam Indium(III)chlorid zum Einsatz, wobei dieses zuvor der wässrigen Eisen(III)chlorid-Lösung zugegeben worden war. Dabei entfielen 8,9 g der wässrigen Eisen(III)chlorid-Lösung auf das Dotiersalz, entsprechend einem Massenanteil von etwa 1,65 Massen-% Indium(III)chlorid in der wässrigen Eisen(III)chlorid-Lösung. Das Beschichten mit der Schicht B erfolgte dergestalt, dass in den Metallinterferenzpigmenten 70,0 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Beispiel G

Nach Erwärmen der wässrigen Suspension auf eine Temperatur von etwa 75 °C und Einstellen des pH-Werts auf etwa 3,4 wurden 493,1 g einer 40%-igen Lösung von Eisen(III)chlorid in Wasser zugegeben. Parallel dazu erfolgte die Zugabe von 333,9 g einer 18,25%-igen Lösung von Ammoniak in Wasser, um die Fällung zu induzieren und den pH-Wert konstant zu halten. Als Dotiersalz kam Gallium(III)nitrat zum Einsatz, wobei dieses zuvor der wässrigen Eisen(III)chlorid-Lösung zugegeben worden war. Dabei entfielen 9,4 g der wässrigen Eisen(III)chlorid-Lösung auf das Dotiersalz, entsprechend einem Massenanteil von etwa 1,91 Massen-% Gallium(III)nitrat in der wässrigen Eisen(III)chlorid-Lösung. Das Beschichten mit der Schicht B erfolgte dergestalt, dass in den Metallinterferenzpigmenten 63,5 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Beispiel H

Nach Erwärmen der wässrigen Suspension auf eine Temperatur von etwa 75 °C und Einstellen des pH-Werts auf etwa 3,4 wurden 548,3 g einer 40%-igen Lösung von Eisen(III)chlorid in Wasser zugegeben. Parallel dazu erfolgte die Zugabe von 371,3 g einer 18,25%-igen Lösung von Ammoniak in Wasser, um die Fällung zu induzieren und den pH-Wert konstant zu halten. Als Dotiersalz kam Gallium(III)nitrat zum Einsatz, wobei dieses zuvor der wässrigen Eisen(III)chlorid-Lösung zugegeben worden war. Dabei entfielen 10,5 g der wässrigen Eisen(III)chlorid-Lösung auf das Dotiersalz, entsprechend einem Massenanteil von etwa 1,91 Massen-% Gallium(III)nitrat in der wässrigen Eisen(III)chlorid-Lösung. Das Beschichten mit der Schicht B erfolgte dergestalt, dass in den Metallinterferenzpigmenten 70,6 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Beispiel I

Nach Erwärmen der wässrigen Suspension auf eine Temperatur von etwa 75 °C und Einstellen des pH-Werts auf etwa 3,4 wurden 569,4 g einer 40%-igen Lösung von Eisen(III)chlorid in Wasser zugegeben. Parallel dazu erfolgte die Zugabe von 356,6 g einer 18,25%-igen Lösung von Ammoniak in Wasser, um die Fällung zu induzieren und den pH-Wert konstant zu halten. Als Dotiersalz kam Titan(IV)oxychlorid (x Hydrogenchlorid) zum Einsatz, wobei dieses zuvor der wässrigen Eisen(III)chlorid-Lösung zugegeben worden war. Dabei entfielen 53,0 g der wässrigen Eisen(III)chlorid-Lösung auf das Dotiersalz, entsprechend einem Massenanteil von etwa 9,30 Massen-% Titan(IV)oxychlorid (x Hydrogenchlorid) in der wässrigen Eisen(III)chlorid-Lösung. Das Beschichten mit der Schicht B erfolgte dergestalt, dass in den Metallinterferenzpigmenten 67,8 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Vergleichsbeispiel A

Nach Erwärmen der wässrigen Suspension auf eine Temperatur von etwa 75 °C und Einstellen des pH-Werts auf etwa 3,4 wurden 490,6 g einer 40%-igen Lösung von Eisen(III)chlorid in Wasser zugegeben. Parallel dazu erfolgte die Zugabe von 338,7 g einer 18,25%-igen Lösung von Ammoniak in Wasser, um die Fällung zu induzieren und den pH-Wert konstant zu halten. Das Beschichten mit der Schicht B erfolgte dergestalt, dass in den Metallinterferenzpigmenten 64,4 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Vergleichsbeispiel B

Nach Erwärmen der wässrigen Suspension auf eine Temperatur von etwa 75 °C und Einstellen des pH-Werts auf etwa 3,4 wurden 518,7 g einer 40%-igen Lösung von Eisen(III)chlorid in Wasser zugegeben. Parallel dazu erfolgte die Zugabe von 358,1 g einer 18,25%-igen Lösung von Ammoniak in Wasser, um die Fällung zu induzieren und den pH-Wert konstant zu halten. Das Beschichten mit der Schicht B erfolgte dergestalt, dass in den Metallinterferenzpigmenten 68,1 g Eisen(III)oxid, bezogen auf 10 g Aluminium, vorlagen. Zu diesem Zweck wurden zunächst entsprechende Vorversuche unter Berücksichtigung der verwendeten Aluminiumplättchen unternommen.

Anschließend wurde der pH-Wert auf etwa 5 eingestellt. Nach Abkühlen und Waschen erfolgte eine Vakuumtrocknung bei einer Temperatur von etwa 60 °C. Schließlich wurde der so erhaltene Feststoff noch einer thermischen Behandlung unterzogen, wobei zunächst mit einer Heizrate von 1,5 °C/min ausgehend von Raumtemperatur bis auf 270 °C aufgeheizt wurde und anschließend mit einer Heizrate von 0,5 °C/min ausgehend von 270 °C bis auf 370 °C aufgeheizt wurde, gefolgt von einem Halten bei 370 °C für eine Dauer von einer Stunde.

Nach erfolgter thermischer Behandlung wurden die so erhaltenen Metallinterferenzpigmente auf ihre koloristischen Eigenschaften, namentlich Bunttonwinkel $h_{ab}15°$ und Buntheit $C^*_{ab}15°$, hin untersucht, wie vorstehend beschrieben. Die Ergebnisse sind in Tabelle 1 gezeigt.

Tabelle 1

| Beispiel | Dotiersalz Massenanteil | m $Fe_2O_3$ / 10 g Al | Bunttonwinkel hab15° | Buntheit C*ab15° |
|---|---|---|---|---|
| A | $Na_2WO_4 \cdot 2H_2O$ 2,25 Massen-% | 68,0 | 86,7 | 69,3 |
| B | $Na_2WO_4 \cdot 2H_2O$ 2,25 Massen-% | 71,0 | 85,6 | 77,4 |
| C | $Na_2WO_4 \cdot 2H_2O$ 6,76 Massen-% | 64,7 | 88,77 | 61,3 |
| D | $Na_2WO_4 \cdot 2H_2O$ 6,76 Massen-% | 68,2 | 87,9 | 70,5 |
| E | $Na_2WO_4 \cdot 2H_2O$ 6,76 Massen-% | 70,5 | 86,5 | 80,4 |
| F | $InCl_3$ 1,65 Massen-% | 70,0 | 85,7 | 81,2 |
| G | $Ga(NO_3)_3$ 1,91 Massen-% | 63,5 | 86,2 | 57,3 |
| H | $Ga(NO_3)_3$ 1,91 Massen-% | 70,6 | 85,2 | 76,3 |
| I | $TiOCl_2 \cdot xHCl$ 9,30 Massen-% | 67,8 | 85,1 | 84,0 |
| | | | | |
| Vergleichsbeispiel | Dotiersalz Massenanteil | m $Fe_2O_3$ / 10 g Al | Bunttonwinkel hab15° | Buntheit C*ab15° |
| A | --- | 64,4 | 79,8 | 70,0 |
| B | --- | 68,1 | 79,7 | 79,4 |

Wie aus den vorstehenden Beispielen A bis I ersichtlich wird, kann durch die Dotierung mit einem Dotierelement, ausgewählt aus der Gruppe, bestehend aus Wolfram, Indium, Gallium und Titan, ein Bunttonwinkel $h_{ab}15°$ von mindestens 85 bei einer Buntheit $C^*_{ab}15°$ von mindestens 55 erreicht werden. Die Metallinterferenzpigmente aus den Beispielen A bis I zeichneten sich also durch einen gelben Farbton mit Grünstich bei zugleich hoher Farbsättigung aus. Demgegenüber konnte ohne Dotierung lediglich ein Bunttonwinkel $h_{ab}15°$ von knapp 80 erreicht werden, wie aus den vorstehenden Vergleichsbeispielen A und B ersichtlich wird. Die Metallinterferenzpigmente aus den Vergleichsbeispielen A und B wiesen demnach keinen gelben Farbton mit Grünstich auf.

**Patentansprüche**

1. Metallinterferenzpigmente, umfassend Aluminiumplättchen mit einer mittleren Dicke im Bereich von 5 nm bis 600 nm, welche gegebenenfalls passiviert sind und welche mit einer Schicht A und einer Schicht B in dieser Reihenfolge beschichtet sind,

   wobei die Schicht A aus Siliziumdioxid aufgebaut ist und die Schicht B aus Eisen(III)oxid, dotiert mit einem Dotierelement, ausgewählt aus der Gruppe, bestehend aus Wolfram, Indium, Gallium und Titan, aufgebaut ist, wobei der Stoffmengenanteil des Dotierelements in der Schicht B, bezogen auf die Gesamtstoffmenge des Eisens und des Dotierelements, 0,5 mol% bis 10 mol% beträgt, und

wobei in den Metallinterferenzpigmenten 60 bis 85 Massenteile Eisen(III)oxid, bezogen auf 10 Massenteile Aluminium, vorliegen.

2. Metallinterferenzpigmente nach Anspruch 1, wobei der Durchmesser $d_{50}$ der Aluminiumplättchen 5 $\mu$m bis 100 $\mu$m beträgt.

3. Metallinterferenzpigmente nach Anspruch 1 oder 2, wobei die Aluminiumplättchen eine Dickenschwankung im Bereich von 10% bis 40% aufweisen.

4. Metallinterferenzpigmente nach einem der Ansprüche 1 bis 3, wobei die Aluminiumplättchen Vakuum-metallisierte Pigmente sind.

5. Metallinterferenzpigmente nach einem der Ansprüche 1 bis 4, wobei die Schicht A eine mittlere Dicke im Bereich von 5 nm bis 200 nm aufweist.

6. Metallinterferenzpigmente nach einem der Ansprüche 1 bis 5, wobei das Dotierelement Wolfram ist.

7. Metallinterferenzpigmente nach einem der Ansprüche 1 bis 6, wobei die Schicht B eine mittlere Dicke im Bereich von 15 nm bis 300 nm aufweist.

8. Metallinterferenzpigmente nach einem der Ansprüche 1 bis 7, wobei die Schicht B mit einer Oberflächenbeschichtung versehen ist.

9. Metallinterferenzpigmente nach einem der Ansprüche 1 bis 8, wobei die Metallinterferenzpigmente einen Bunttonwinkel $h_{ab}15°$ von mindestens 85 bei einer Buntheit $C^*_{ab}15°$ von mindestens 55 aufweisen.

10. Metallinterferenzpigmente nach einem der Ansprüche 1 bis 9, wobei die Metallinterferenzpigmente einen Farbab-stand $\Delta E110°$ von weniger als 1,5 aufweisen.

11. Verfahren zur Herstellung der Metallinterferenzpigmente nach einem der Ansprüche 1 bis 10, umfassend die nachstehenden Schritte (a) bis (c):

(a) Bereitstellen von Aluminiumplättchen mit einer mittleren Dicke im Bereich von 5 nm bis 600 nm, welche gegebenenfalls passiviert sind;
(b) Beschichten der in Schritt (a) bereitgestellten Aluminiumplättchen mit einer Schicht A aus Siliziumdioxid durch hydrolytische Zersetzung einer organischen Siliziumverbindung oder durch Fällung von Wasserglas; und
(c) Beschichten der in Schritt (b) erhaltenen Schicht A mit einer Schicht B aus Eisen(III)oxid, dotiert mit einem Dotierelement, ausgewählt aus der Gruppe, bestehend aus Wolfram, Indium, Gallium und Titan, durch Fällung eines Eisensalzes in der Gegenwart eines Dotiersalzes, ausgewählt aus der Gruppe, bestehend aus einem Wolframsalz, einem Indiumsalz, einem Galliumsalz und einem Titansalz.

12. Verfahren nach Anspruch 11, wobei das Dotiersalz aus der Gruppe, bestehend aus Natriumwolframat (Dihydrat), Indium(III)chlorid, Gallium(III)nitrat und Titan(IV)oxychlorid (x Hydrogenchlorid), ausgewählt ist.

13. Verfahren nach Anspruch 12, wobei das Dotiersalz Natriumwolframat (Dihydrat) ist.

14. Verfahren nach einem der Ansprüche 11 bis 13, weiter umfassend den nachstehenden Schritt (d):
(d) Versehen der in Schritt (c) erhaltenen Schicht B mit einer Oberflächenbeschichtung.

15. Verwendung der Metallinterferenzpigmente nach einem der Ansprüche 1 bis 10 zur Einfärbung von Lacken, Druckfarben, Tinten, Kunststoffen, Gläsern, Keramiken und Zubereitungen der dekorativen Kosmetik.

**Claims**

1.  Metal interference pigments comprising aluminum platelets having an average thickness in the range of from 5 nm to 600 nm, which are optionally passivated and which are coated with a layer A and a layer B in this order,

    wherein layer A is composed of silicon dioxide and layer B is composed of iron(III) oxide doped with a dopant element selected from the group consisting of tungsten, indium, gallium and titanium,
    wherein the molar fraction of the dopant element in layer B, based on the total molar amount of iron and the dopant element, is from 0.5 mol% to 10 mol%, and
    wherein 60 to 85 parts by mass of iron(III) oxide, based on 10 parts by mass of aluminum, are present in the metal interference pigments.

2.  The metal interference pigments according to claim 1, wherein the diameter $d_{50}$ of the aluminum platelets is 5 $\mu$m to 100 $\mu$m.

3.  The metal interference pigments according to claim 1 or 2, wherein the aluminum platelets have a thickness variation in the range of 10% to 40%.

4.  The metal interference pigments according to any one of claims 1 to 3, wherein the aluminum platelets are vacuum-metallized pigments.

5.  The metal interference pigments according to any one of claims 1 to 4, wherein layer A has an average thickness in the range of from 5 nm to 200 nm.

6.  The metal interference pigments according to any one of claims 1 to 5, wherein the dopant element is tungsten.

7.  The metal interference pigments according to any one of claims 1 to 6, wherein the layer B has an average thickness in the range of from 15 nm to 300 nm.

8.  The metal interference pigments according to any one of claims 1 to 7, wherein the layer B is provided with a surface coating.

9.  The metal interference pigments according to any one of claims 1 to 8, wherein the metal interference pigments have a hue angle $h_{ab}15°$ of at least 85 at a hue $C^*_{ab}15°$ of at least 55.

10. The metal interference pigments according to any one of claims 1 to 9, wherein the metal interference pigments have a color distance $\Delta E110°$ of less than 1.5.

11. A method for producing the metal interference pigments according to any one of claims 1 to 10, comprising the following steps (a) to (c):

    (a) providing aluminum platelets having an average thickness in the range of from 5 nm to 600 nm, which are optionally passivated;
    (b) coating the aluminum platelets provided in step (a) with a layer A of silicon dioxide by hydrolytic decomposition of an organic silicon compound or by precipitation of water glass; and
    (c) coating the layer A obtained in step (b) with a layer B of iron(III) oxide doped with a dopant element selected from the group consisting of tungsten, indium, gallium and titanium by precipitation of an iron salt in the presence of a dopant salt selected from the group consisting of a tungsten salt, an indium salt, a gallium salt and a titanium salt.

12. The method according to claim 11, wherein the dopant salt is selected from the group consisting of sodium tungstate (dihydrate), indium(III) chloride, gallium(III) nitrate, and titanium(IV) oxychloride (x hydrogen chloride).

13. The method according to claim 12, wherein the dopant salt is sodium tungstate (dihydrate).

14. The method according to any one of claims 11 to 13, further comprising the following step (d):
    (d) providing the layer B obtained in step (c) with a surface coating.

**15.** Use of the metal interference pigments according to any one of claims 1 to 10 for coloring paints, printing inks, inks, plastics, glasses, ceramics and preparations of decorative cosmetics.

**Revendications**

**1.** Pigments d'interférence métalliques comprenant des plaquettes d'aluminium ayant une épaisseur moyenne dans la plage de 5 nm à 600 nm, qui sont en option passivées et qui sont enrobées d'une couche A et d'une couche B dans cet ordre,

dans lesquels la couche A est composée de dioxyde de silicium et la couche B est composée d'oxyde de fer(III) dopé avec un élément dopant sélectionné parmi le groupe constitué du tungstène, de l'indium, du gallium et du titane,

dans lesquels la fraction molaire de l'élément dopant dans la couche B, basée sur la quantité molaire totale de fer et de l'élément dopant, va de 0,5 % en mole à 10 % en mole, et

dans lesquels 60 à 85 parties en masse d'oxyde de fer(III), basées sur 10 parties en masse d'aluminium, sont présentes dans les pigments d'interférence métalliques.

**2.** Pigments d'interférence métalliques selon la revendication 1, dans lesquels le diamètre $d_{50}$ des plaquettes d'aluminium est de 5 $\mu$m à 100 $\mu$m.

**3.** Pigments d'interférence métalliques selon la revendication 1 ou 2, dans lesquels les plaquettes d'aluminium ont une variation d'épaisseur dans la plage de 10 % à 40 %.

**4.** Pigments d'interférence métalliques selon l'une quelconque des revendications 1 à 3, dans lesquels les plaquettes d'aluminium sont des pigments métallisés sous vide.

**5.** Pigments d'interférence métalliques selon l'une quelconque des revendications 1 à 4, dans lesquels la couche A a une épaisseur moyenne dans la plage de 5 nm à 200 nm.

**6.** Pigments d'interférence métalliques selon l'une quelconque des revendications 1 à 5, dans lesquels l'élément dopant est le tungstène.

**7.** Pigments d'interférence métalliques selon l'une quelconque des revendications 1 à 6, dans lesquels la couche B a une épaisseur moyenne dans la plage de 15 nm à 300 nm.

**8.** Pigments d'interférence métalliques selon l'une quelconque des revendications 1 à 7, dans lesquels la couche B est pourvue d'un enrobage superficiel.

**9.** Pigments d'interférence métalliques selon l'une quelconque des revendications 1 à 8, dans lesquels les pigments d'interférence métalliques ont un angle de teinte $h_{ab}15°$ d'au moins 85 à une teinte $C^*_{ab}15°$ d'au moins 55.

**10.** Pigments d'interférence métalliques selon l'une quelconque des revendications 1 à 9, dans lesquels les pigments d'interférence métalliques ont un écart de couleur $\Delta E110°$ de moins de 1,5.

**11.** Procédé de production des pigments d'interférence métalliques selon l'une quelconque des revendications 1 à 10, comprenant les étapes (a) à (c) suivantes :

(a) fournir des plaquettes d'aluminium ayant une épaisseur moyenne dans la plage de 5 nm à 600 nm, qui sont en option passivées ;

(b) enrober les plaquettes d'aluminium fournies à l'étape (a) d'une couche A de dioxyde de silicium par décomposition hydrolytique d'un composé de silicium organique ou par précipitation de silicate de sodium ; et

(c) enrober la couche A obtenue à l'étape (b) d'une couche B d'oxyde de fer(III) dopé avec un élément dopant sélectionné parmi le groupe constitué du tungstène, de l'indium, du gallium et du titane par précipitation d'un sel de fer en présence d'un sel dopant sélectionné parmi le groupe constitué d'un sel de tungstène, d'un sel d'indium, d'un sel de gallium et d'un sel de titane.

**12.** Procédé selon la revendication 11, dans lequel le sel dopant est sélectionné parmi le groupe constitué du tungstate de sodium (dihydraté), du chlorure d'indium(III), du nitrate de gallium(III) et de l'oxychlorure de titane(IV) (x chlorure d'hydrogène).

13. Procédé selon la revendication 12, dans lequel le sel dopant est le tungstate de sodium (dihydraté).

14. Procédé selon l'une quelconque des revendications 11 à 13, comprenant en outre l'étape (d) suivante :
(d) pourvoir la couche B obtenue à l'étape (c) d'un enrobage superficiel.

15. Utilisation des pigments d'interférence métalliques selon l'une quelconque des revendications 1 à 10 pour colorer des peintures, encres d'impression, encres, plastiques, verres, céramiques et préparations de produits cosmétiques décoratifs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019063372 A1
- WO 2020038684 A1
- WO 2015040537 A1
- WO 2015014484 A1
- WO 2015044188 A1